(19) Europäisches Patentamt
European Patent Office
Office européen des brevets

(11) Publication number: **0 101 978**
**B1**

(12) # EUROPEAN PATENT SPECIFICATION

(45) Date of publication of patent specification: **29.10.86**

(51) Int. Cl.$^4$: **C 08 F 10/00,** C 08 F 4/62

(21) Application number: **83107697.1**

(22) Date of filing: **04.08.83**

(54) **Olefin polymerization.**

(30) Priority: **05.08.82 US 405646**

(43) Date of publication of application:
**07.03.84 Bulletin 84/10**

(45) Publication of the grant of the patent:
**29.10.86 Bulletin 86/44**

(84) Designated Contracting States:
**AT BE CH DE FR GB IT LI LU NL SE**

(56) References cited:
**EP-A-0 000 007**
**EP-A-0 007 425**
**US-A-4 310 648**

(73) Proprietor: **PHILLIPS PETROLEUM COMPANY**
**5th and Keeler**
**Bartlesville Oklahoma 74004 (US)**

(72) Inventor: **Welch, Melvin Bruce**
**4716 Barlow Drive**
**Bartlesville Oklahoma 74003 (US)**

(74) Representative: **Dost, Wolfgang, Dr.rer.nat.,**
**Dipl.-Chem. et al**
**Patent- und Rechtsanwälte Bardehle-**
**Pagenberg-Dost-Altenburg & Partner Postfach**
**86 06 20**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 101 978 B1

**Description**

Background of the invention

The invention relates to a composition of matter, a method of preparing same, catalyst, a method of producing a catalyst and a process of using the catalyst. In another aspect, this invention relates to a particularly effective ethylene polymerization catalyst and process.

In the production of polyolefins such as, for example, polyethylene, propylene, ethylene-butene copolymers, etc., an important aspect of the various processes and catalysts used to produce such polymers is the productivity. By productivity is meant the amount or yield of solid polymer that is obtained by employing a given quantity of catalysts. If the productivity is high enough, then the amount of catalyst residues contained in the polymer is low enough that the presence of the catalyst residues does not significantly affect the properties of the polymer and the polymer does not require additional processing to remove the catalyst residues. As those skilled in the art are aware, removal of catalyst residues from polymer is an expensive process and it is very desirable to employ a catalyst which provides sufficient productivity so that catalyst residue removal is not necessary.

In addition, high productivities are desirable in order to minimize catalyst costs. Therefore, it is desirable to develop new and improved catalysts and polymerization processes which provide improved polymer productivities.

In US-Patent 4 363 746 Charles E. Capshew discloses a new process for preparing a high productivity olefin polymerization catalyst by (1) forming a solution of a first catalyst component by reacting a metal halide such as magnesium dichloride with a titanium tetrahydrocarbyloxide, and then (2) reacting the solution of said first catalyst component with a hydrocarbylaluminum halide to obtain a solid, and then (3) treating that solid with a halide ion exchanging source such as titanium tetrachloride. The disclosure of US-Patent 4 363 746 is incorporated herein by reference.

The present invention is based in part on the observation that generally after step (2) of the Capshew process there is additional titanium tetrahydrocarbyloxide and hydrocarbylaluminum halide remaining in the mother liquor of the reaction.

One object of the present invention is to increase the amount of catalyst that can be obtained from a given amount of titanium tetrahydrocarbyloxide and hydrocarbylaluminum halide.

Accordingly, an object of the present invention is to provide a catalyst for the polymerization of olefins.

Still another object of the present invention is to provide catalyst systems which provides higher productivity in polymerization than other closely related catalyst systems.

Other objects, aspects, and the several advantages of this invention will be apparent to those skilled in the art upon a study of this disclosure and the appended claims.

Summary of the invention

The novel catalysts of the present invention are prepared by (1) forming a solution of a first catalyst component by reacting a metal halide selected from the group consisting of the metal dihalides and metal hydroxyhalide compounds of Groups IIA and IIB with a titanium tetrahydrocarbyloxide, and then (2) contacting the solution of said first catalyst component with a dihydrocarbyl magnesium compound and a hydrocarbylaluminum halide to obtain at least one solid precipitate, and then (3) treating said solid precipitate with a halide ion exchanging source selected from the group consisting of the halides of transition metals.

Detailed description of the invention

Suitable titanium tetrahydrocarbyloxide compounds for employment in step (1) include those of the type specified in the aforementioned Capshew application, viz. those of the formula:

$$Ti(OR)_4$$

wherein each R is individually selected from an alkyl, cycloalkyl, aryl, alkaryl, or aralkyl hydrocarbon radicals containing 1 to 20 carbon atoms. Titanium tetrahydrocarbyloxides in which the hydrocarbyl groups contain 1 to 10 atoms are more readily available and thus more preferred. Examples of compounds of that formula are titanium tetramethoxide, titanium dimethoxydiethoxide, titanium, tetraethoxide, titanium tetra-n-butoxide, titanium tetrahexyloxide, titanium tetracyclohexyloxide, and titanium tetraphenoxide. Tetraalkyl oxides are currently the most preferred.

The metal halides that can be reacted with the titanium tetrahydrocarbyloxide also include those set forth for that reaction in the aforementioned Capshew disclosure, viz. the metal dihalides and metal hydroxyhalides of metals of Groups IIA and IIB of the Periodic Table. Examples of such metal halides include beryllium dichloride, beryllium dibromide, magnesium hydroxyiodide, magnesium dichloride, magnesium hydroxychloride, calcium dichloride, zinc dichloride, and zinc hydroxychloride. Magnesium dichloride is currently preferred.

The molar ratio of the titanium tetrahydrocarbyloxide and the metal halide can vary over a broad range in preparing the solution of the first catalyst component. The present invention is however particularly useful for those situations in which magnesium dichloride is employed and the molar ratio of titanium

tetrahydrocarbyloxide is greater than 2:1 since in those situations the solvent generally contains significant amounts of unreacted titanium reactant. Typically the molar ratio of titanium tetrahydrocarbyloxide to metal halide is no greater than 10:1.

The conditions employed in producing the soluble titanium and magnesium complex are as set forth in the aforementioned Capshew Patent.

In step (2) of the present invention, the solution from step (1) is contacted with the hydrocarbylaluminum halide and the dihydrocarbyl magnesium compound in any order. In an especially preferred embodiment, the product of step (1) is contacted with the two precipitating agents simultaneously. In yet another embodiment of the present invention, one can employ a complex of the two named precipitating agents. Although generally not the most active, catalysts can be formed by reacting the solution of step (1) with the hydrocarbylaluminum halide, separating the resulting solid from the reaction mixture, and then reacting the remaining reaction mixture with dihydrocarbyl magnesium. This technique allows one to obtain two catalysts, the one resulting from the first precipitation being more active than the one resulting from the second precipitation.

The hydrocarbylaluminum halides that can be employed in this invention are the same as those set forth in the Capshew Patent. Generally, this includes those halides of the formulas

$RAlX_2$,

$R_2AlX$, and

$R_3Al_2X_3$

wherein each R is individually selected from alkyl radicals containing 1 to 20 carbon atoms per radical and X is a halogen. Examples of such compounds include methylaluminum dibromide, ethylaluminum dichloride, ethylaluminum diiodide, isobutylaluminum dichloride, methyl-n-propylaluminum bromide, diethylaluminum chloride, and ethylaluminum sesquichloride.

The dihydrocarbyl magnesium compounds can be expressed by the formula $MgR_2$ in which each R is individually selected from the group consisting of hydrocarbyl radicals having 1 to 12 carbon atoms. The presently preferred compounds are the dialkyl magnesium compounds in which each alkyl group contains 1 to 6 carbon atoms. Specific examples of such magnesium compounds include dimethyl magnesium, diethyl magnesium, n-butyl-sec-butyl magnesium, didodecyl magnesium, diphenyl magnesium, dicyclohexyl magnesium and the like. Commercial trialkylaluminum/dialkyl magnesium solutions can be used as well (i.e., magala).

The amount of hydrocarbylaluminum halide employed can vary widely. Typically, the molar ratio of the hydrocarbylaluminum compound to the titanium tetrahydrocarbyloxide is in the range of 10/1 to 1/10, preferably 1/3 to 1/6.

The amount of dihydrocarbyl magnesium employed can also vary widely. Typically the molar ratio of the dihydrocarbyl magnesium compound to the titanium tetrahydrocarbyl oxide is in the range of about 10/1 to about 1/10. The dihydrocarbyl magnesium compound is preferably used in an amount sufficient to react with substantially all of the titanium tetrahydrocarbyloxide that has not reacted with magnesium dihalide to form a soluble complex in step (1). Typically, it is thus preferred to use about 0.5 to 2 moles of dihydrocarbyl magnesium for each mole of titanium tetrahydrocarbyloxide that was not complexed with magnesium dihalide in step (1).

The temperature employed in step (2) can be selected over a broad range. Typically temperatures in the range of −100°C to 100°C would be employed, temperatures in the range of −10°C to 30°C being most convenient.

The halide ion exchanging source employed in step (3) is a transition metal halide. Examples of such halides include titanium tetrachloride, vanadium oxychloride, and zirconium tetrahalide.

The temperature needed for conducting step (3) can be selected over a relatively broad range. Temperatures in the range of 0°C to 200°C are typical. It is generally desirable to use a hydrocarbon diluent in step (3), although the halogen ion exchanging source alone can be used when it is in a liquid state. The treating time can likewise vary over a broad range and generally is in the range of about 10 minutes to about 10 hours. The extent of contacting time can readily be determined by observing the extent to which the catalyst activity is promoted by the treatment of step (3).

The weight ratio of the halide ion exchanging source to the precipitate can vary over a wide range, typically it is in the range of about 10:1 to 1:10, more generally about 7:1 to 1:4. Following step (3) excess treating agent is preferably washed off the catalyst with dry (substantially anhydrous) liquids such as n-hexane, n-pentane, or xylene.

The inventive catalyst is most preferably used in combination with a cocatalyst in the polymerization of olefins. The preferred cocatalysts are those typically used in polymerizations using titanium based catalysts. Examples include organoaluminum compounds of the formulas:

$R_3Al$,

$R_2AlX$,

$RAlX_2$, and

$R_3Al_2X_3$

wherein each R is individually selected from linear and branched chain alkyl radicals containing 1 to 20 carbon atoms and X is a halogen atom. Typical examples include triethylaluminum, diethylaluminum chloride, triisobutylaluminum chloride, ethylaluminum dichloride, and ethyl aluminum sesquichloride.

A variety of polymerizable compounds are suitable for use in the process of the present invention. Olefins which can be homopolymerized or copolymerized with the invention catalysts include aliphatic mono-1-olefins. While the invention would appear to be suitable for use with any aliphatic mono-1-olefin, those olefins having 2 to 18 carbon atoms are most often used. The mono-1-olefins can be polymerized according to the present invention employing either a particle form process or a solution form process. Aliphatic mono-1-olefins can be copolymerized with other 1-olefins and/or with other smaller amounts of other ethylenically unsaturated monomers, such as 1,3-butadiene, isoprene, 1,3-pentadiene, styrene, alpha-methylstyrene, and similar ethylenically unsaturated monomers which do not impair the catalyst.

In one aspect of the present invention, the inventive catalysts are particularly useful for the polymerization of ethylene homopolymers.

If desired the inventive catalyst can before use have prepolymer deposited thereon. Such has in some cases resulted in catalysts capable of producing polymers of reduced fines.

A further understanding of the present invention and its advantages will be provided by the following examples.

Example I

About 10.7 milliliters of titanium tetraethoxide was added to a 500 milliter flask containing 2.5 grams of magnesium chloride. The mixture was heated to 100°C and stirred for 30 minutes then cooled. The resulting solution and 35 milliters of 25.0 weight percent ethyl aluminum sesquichloride in n-heptane (density 0.762 gm/cc) and 20 milliters of 0.637 molar n-butyl-sec-butyl magnesium were combined in a vessel simultaneously over a time period of about twenty minutes. The solid product was washed twice with hydrocarbon and then in the presence of hydrocarbon combined with 20 milliters of $TiCl_4$ and stirred for 1 hour at room temperature. The resulting solid was recovered by decanting off the liquid and then the solid was washed twice with n-hexane and twice with n-pentane. It was then dried over a hot water bath.

The amount of dry solid recovered was 10.6 grams. This compares to a yield of about 6.25 to 7.5 grams of solid that would typically be obtained from the same quantities of reactants in the absence of the alkyl magnesium.

Example II

The catalyst of Example I was evaluated for activity in the polymerization of ethylene using various aluminum alkyl cocatalysts. The polymerizations were carried out in an autoclave reactor for 1 hour at 100°C in the presence of hydrogen with 200 psi of ethylene using isobutane as solvent. The conditions and results are summarized in the following table.

TABLE 1

| Polymerization No. | Cocatalyst Type | Cocatalyst mmole | Catalyst gm | $H_2$ psi | Yield gm | Product kg/g/hr | HLMI/MI |
|---|---|---|---|---|---|---|---|
| 1 | TEA | 0.5 | .0040 | 50 | 380 | 95 | 31 |
| 2 | TIBA | 0.42 | .0062 | 60 | 450 | 73 | 27 |
| 3 | DEAC | 1.52 | .0042 | 80 | 306 | 77 | 29 |

The reaction with the triethylaluminum (TEA) cocatalyst gave activity within the range that is normally obtained when TEA is used with a catalyst prepared without the use of the alkyl magnesium. The activities using triisobutylaluminum (TIBA) and diethylaluminum chloride (DEAC) were much higher than that obtained when such cocatalysts are employed using a catalyst prepared without the use of the alkyl magnesium. Such prior art catalysts generally have shown activities of about 42 kg of polymer/gm of catalyst/hour for TIBA and no more than about 1.5 kg/gm/hr for DEAC. Thus the catalyst of this invention is particularly advantageous in that it permits the use of a wider range of cocatalysts without as significant an adverse effect upon the activity.

**Claims for the Contracting States: BE, CH, DE, FR, GB, IT, LI, LU, NL, SE**

1. A catalyst suitable for the polymerization of olefins obtained by

(1) forming a solution of a first catalyst component by reacting a metal halide selected from metal dihalides and metal hydroxyhalides of Group IIA or IIB metals with a titanium tetrahydrocarbyloxide, then

(2) contacting said solution of said first catalyst component with a dihydrocarbyl magnesium compound and a hydrocarbylaluminum halide to obtain at least one solid precipitate, and then

(3) treating said solid precipitate with a halide ion exchanging source selected from halides of transition metals.

2. The catalyst of claim 1 characterized in that said titanium tetrahydrocarbyloxide is of the formula

$$Ti(OR)_4$$

wherein each R is individually selected from an alkyl, cycloalkyl, aryl, alkaryl, or aralkyl hydrocarbon radical containing 1 to 20 carbon atoms.

3. The catalyst of claim 1 or 2 characterized in that said dihydrocarbyl magnesium compound is selected from dialkyl magnesium compounds in which each alkyl group has 1 to 6 carbon atoms.

4. The catalyst of any of claims 1 to 3 characterized in that said hydrocarbylaluminum halide is selected from those of the formulas

$$RAlX_2,$$

$$R_2AlX, \text{ and}$$

$$R_3Al_2X_3$$

wherein each R is individually selected from alkyl radicals containing 1 to 20 carbon atoms per radical and X is a halogen atom.

5. The catalyst of any of claims 1 to 4 characterized in that said metal halide is magnesium dichloride, said titanium tetrahydrocarbyloxide is titanium tetraethoxide, and said hydrocarbylaluminum halide is ethyl aluminum sesquichloride.

6. The catalyst of any of claims 1 to 5 characterized in that said transition metal halide is titanium tetrachloride.

7. The catalyst of any of claims 1 to 6 characterized in that said dihydrocarbyl magnesium compound is n-butyl-sec-butyl magnesium.

8. The catalyst of any of claims 1 to 7 characterized in that said solution of said first catalyst component is contacted with said dihydrocarbyl magnesium compound and said hydrocarbylaluminum halide simultaneously; or wherein said solution of said first catalyst component is first contacted with said hydrocarbylaluminum halide and then the resulting reaction mixture is contacted with said dihydrocarbyl magnesium compound.

9. The catalyst of any of claims 1 to 8 characterized in that said metal halide in (1) is magnesium dichloride and the molar ratio of titanium tetrahydrocarbyloxide to magnesium dichloride is in the range of 2:1 to 10:1, the molar ratio of hydrocarbylaluminum halide in (2) to titanium tetrahydrocarbyloxide in (1) is in the range of 1:3 to 1:6, and the molar ratio of dihydrocarbyl magnesium compound in (2) to titanium tetrahydrocarbyl oxide in (1) is in the range of 10:1 to 1:10.

10. Use of the catalyst of any of claims 1 to 9 for the polymerization of olefins, preferably in the presence of an organoaluminum cocatalyst.

11. The embodiment of claim 10 characterized in that said olefin is ethylene and said cocatalyst is triisobutylaluminum or diethylaluminum chloride.

**Claims for the Contracting State: AT**

1. A process for making a catalyst suitable for the polymerization of olefins, comprising

(1) forming a solution of a first catalyst component by reacting a metal halide selected from metal dihalides and metal hydroxyhalides of Group IIA or IIB metals with a titanium tetrahydrocarbyloxide, then

(2) contacting said solution of said first catalyst component with a dihydrocarbyl magnesium compound and a hydrocarbylaluminum halide to obtain at least one solid precipitate, and then

(3) treating said solid precipitate with a halide ion exchanging source selected from halides of transition metals.

2. The process of claim 1 characterized in that said titanium tetrahydrocarbyloxide is of the formula

$$Ti(OR)_4$$

wherein each R is individually selected from an alkyl, cycloalkyl, aryl, alkaryl, or aralkyl hydrocarbon radical containing 1 to 20 carbon atoms.

3. The process of claim 1 or 2 characterized in that said dihydrocarbyl magnesium compound is selected from dialkyl magnesium compounds in which each alkyl group has 1 to 6 carbon atoms.

4. The process of any of claims 1 to 3 characterized in that said hydrocarbylaluminum halide is selected from those of the formulas

$RAlX_2$,

$R_2AlX$, and

$R_3Al_2X_3$

wherein each R is individually selected from alkyl radicals containing 1 to 20 carbon atoms per radical and X is a halogen atom.

5. The process of any of claims 1 to 4 characterized in that said metal halide is magnesium dichloride, said titanium tetrahydrocarbyloxide is titanium tetraethoxide, and said hydrocarbylaluminum halide is ethyl aluminum sesquichloride.

6. The process of any of claims 1 to 5 characterized in that said transition metal halide is titanium tetrachloride.

7. The process of any of claims 1 to 6 characterized in that said dihydrocarbyl magnesium compound is n-butyl-sec-butyl magnesium.

8. The process of any of claims 1 to 7 characterized in that said solution of said first catalyst component is contacted with said dihydrocarbyl magnesium compound and said hydrocarbylaluminum halide simultaneously; or wherein said solution of said first catalyst component is first contacted with said hydrocarbylaluminum halide and then the resulting reaction mixture is contacted with said dihydrocarbyl magnesium compound.

9. The process of any of claims 1 to 8 characterized in that said metal halide in (1) is magnesium dichloride and the molar ratio of titanium tetrahydrocarbyloxide to magnesium dichloride is in the range of 2:1 to 10:1, the molar ratio of hydrocarbylaluminum halide in (2) to titanium tetrahydrocarbyloxide in (1) is in the range of 1:3 to 1:6, and the molar ratio of dihydrocarbyl magnesium compound in (2) to titanium tetrahydrocarbyl oxide in (1) is in the range of 10:1 to 1:10.

10. Use of the catalyst as obtained in any of claims 1 to 9 for the polymerization of olefins, preferably in the presence of an organoaluminum cocatalyst.

11. The embodiment of claim 10 characterized in that said olefin is ethylene and said cocatalyst is triisobutylaluminum or diethylaluminum chloride.

**Patentansprüche für die Vertragsstaaten: BE, CH, DE, FR, GB, IT, LI, LU, NL, SE**

1. Für die Polymerisation von Olefinen geeigneter Katalysator, erhalten durch

(1) Herstellen einer Lösung einer ersten Katalysatorkomponente durch Umsetzen eines Metallhalogenids, ausgewählt aus Metalldihalogeniden und Metallhydroxyhalogeniden von Metallen der Gruppe IIA oder IIB mit einem Titantetrahydrocarbyloxid, daraufhin

(2) Kontaktieren der Lösung der ersten Katalysatorkomponente mit einer Dihydrocarbylmagnesium-Verbindung und einem Hydrocarbylaluminiumhalogenid unter Bildung mindestens eines festen Niederschlags, und daraufhin

(3) Behandeln des festen Niederschlages mit einem Halogenidionenaustauscher, ausgewählt aus Halogeniden von Übergangsmetallen.

2. Katalysator nach Anspruch 1, dadurch gekennzeichnet, daß das Titantetrahydrocarbyloxid die Formel

$Ti(OR)_4$

hat, wobei jedes R unabhängig aus einem Alkyl-, Cycloalkyl-, Aryl-, Alkaryl- oder Aralkylkohlenwasserstoffrest mit 1—20 Kohlenstoffatomen ausgewählt ist.

3. Katalysator nach Anspruch 1 oder 2, dadurch gekennzeichnet, daß die Dihydrocarbylmagnesium-Verbindung aus Dialkylmagnesium-Verbindungen ausgewählt ist, in denen jede Alkylgruppe 1—6 Kohlenstoffatome aufweist.

4. Katalysator nach einem der Ansprüche 1—3, dadurch gekennzeichnet, daß das Hydrocarbylaluminiumhalogenid aus solchen der Formeln

$RAlX_2$,

$R_2AlX$, und

$R_3Al_2X_3$

ausgewählt ist, wobei jedes R unabhängig aus Alkylresten mit 1—20 Kohlenstoffatomen pro Rest ausgewählt ist, und X ein Halogenatom ist.

5. Katalysator nach einem der Ansprüche 1—4, dadurch gekennzeichnet, daß das Metallhalogenid Magnesiumdichlorid ist, das Titantetrahydrocarbyloxid Titantetraethoxid ist, und das Hydrocarbylaluminiumhalogenid Ethylaluminiumsesquichlorid ist.

6. Katalysator nach einem der Ansprüche 1—5, dadurch gekennzeichnet, daß das Übergangsmetallhalogenid Titantetrachlorid ist.

7. Katalysator nach einem der Ansprüche 1—6, dadurch gekennzeichnet, daß die Dihydrocarbylmagnesium-Verbindung n-Butyl-sec-butylmagnesium ist.

8. Katalysator nach einem der Ansprüche 1—7, dadurch gekennzeichnet, daß die Lösung der ersten Katalysatorkomponente gleichzeitig mit der Dihydrocarbylmagnesium-Verbindung und dem Hydrocarbylaluminiumhalogenid kontaktiert wird; oder wobei die Lösung der ersten Katalysatorkomponente zuerst mit dem Hydrocarbylaluminiumhalogenid und danach das sich ergebende Reaktionsgemisch mit der Dihydrocarbylmagnesium-Verbindung kontaktiert wird.

9. Katalysator nach einem der Ansprüche 1—8, dadurch gekennzeichnet, daß das Metallhalogenid in (1) Magnesiumdichlorid ist und das Molverhältnis von Titantetrahydrocarbyloxid zu Magnesiumdichlorid im Bereich von 2:1 bis 10:1 liegt, das Molverhältnis von Hydrocarbylaluminiumhalogenid in (2) zu Titantetrahydrocarbyloxid in (1) im Bereich von 1:3 bis 1:6 liegt, und das Molverhältnis der Dihydrocarbylmagnesium-Verbindung in (2) zu Titantetrahydrocarbyloxid in (1) im Bereich von 10:1 bis 1:10 liegt.

10. Verwendung des Katalysators nach einem der Ansprüche 1—9 für die Polymerisation von Olefinen, vorzugsweise in Gegenwart eines aluminiumorganischen Cokatalysators.

11. Ausführungsform nach Anspruch 10, dadurch gekennzeichnet, daß das Olefin Ethylen ist und daß der Cokatalysator Triisobutylaluminium oder Diethylaluminiumchlorid ist.

**Patentansprüche für den Vertragsstaat: AT**

1. Verfahren zur Herstellung eines für die Polymerisation von Olefinen geeigneten Katalysators, gekennzeichnet durch

(1) Herstellen einer Lösung einer ersten Katalysatorkomponente durch Umsetzen eines Metallhalogenids, ausgewählt aus Metalldihalogeniden und Metallhydroxyhalogeniden von Metallen der Gruppe IIA oder IIB mit einem Titantetrahydrocarbyloxid, daraufhin

(2) Kontaktieren der Lösung der ersten Katalysatorkomponente mit einer Dihydrocarbylmagnesium-Verbindung und einem Hydrocarbylaluminiumlogenid unter Bildung mindestens eines festen Niederschlags, und daraufhin

(3) Behandeln des festen Niederschlages mit einem Halogenidionenaustauscher, ausgewählt aus Halogeniden von Übergangsmetallen.

2. Verfahren nach Anspruch 1, dadurch gekennzeichnet, daß das Titantetrahydrocarbyloxid die Formel

$$Ti(OR)_4$$

hat, wobei jedes R unabhängig aus einem Alkyl-, Cycloalkyl-, Aryl-, Alkaryl- oder Aralkylkohlenwasserstoffrest mit 1—20 Kohlenstoffatomen ausgewählt ist.

3. Verfahren nach Anspruch 1 oder 2, dadurch gekennzeichnet, daß die Dihydrocarbylmagnesium-Verbindung aus Dialkylmagnesium-Verbindungen ausgewählt ist, in denen jede Alkylgruppe 1—6 Kohlenstoffatome aufweist.

4. Verfahren nach einem der Ansprüche 1—3, dadurch gekennzeichnet, daß das Hydrocarbylaluminiumhalogenid aus solchen der Formeln

$RAlX_2$,

$R_2AlX$, und

$R_3Al_2X_3$

ausgewählt ist, wobei jedes R unabhängig aus Alkylresten mit 1—20 Kohlenstoffatomen pro Rest ausgewählt ist, und X ein Halogenatom ist.

5. Verfahren nach einem der Ansprüche 1—4, dadurch gekennzeichnet, daß das Metallhalogenid Magensiumdichlorid ist, das Titantetrahydrocarbyloxid Titantetraethoxid ist, und das Hydrocarbylaluminiumhalogenid Ethylaluminiumsesquichlorid ist.

6. Verfahren nach einem der Ansprüche 1—5, dadurch gekennzeichnet, daß das Übergangsmetallhalogenid Titantetrachlorid ist.

7. Verfahren nach einem der Ansprüche 1—6, dadurch gekennzeichnet, daß die Dihydrocarbylmagnesium-Verbindung n-Butyl-sec-butylmagnesium ist.

8. Verfahren nach einem der Ansprüche 1—7, dadurch gekennzeichnet, daß die Lösung der ersten Katalysatorkomponente gleichzeitig mit der Dihydrocarbylmagnesium-Verbindung und dem Hydrocarbylaluminiumhalogenid kontaktiert wird; oder wobei die Lösung der ersten Katalysatorkomponente zuerst mit dem Hydrocarbylaluminiumhalogenid und danach das erhaltene Reaktionsgemisch mit der Dihydrocarbylmagnesium-Verbindung kontaktiert wird.

9. Verfahren nach einem der Ansprüche 1—8, dadurch gekennzeichnet, daß das Metallhalogenid in (1) Magnesiumdichlorid ist und das Molverhältnis von Titantetrahydrocarbyloxid zu Magnesiumdichlorid im Bereich von 2:1 bis 10:1 liegt, das Molverhältnis von Hydrocarbylaluminiumhalogenid in (2) zu Titantetrahydrocarbyloxid in (1) im Bereich von 1:3 bis 1:6 liegt, und das Molverhältnis der Dihydrocarbylmagnesium-Verbindung in (2) zu Titantetrahydrocarbyloxid in (1) im Bereich von 10:1 bis 1:10 liegt.

10. Verwendung des nach einem der Ansprüche 1—9 erhaltenen Katalysators für die Polymerisation von Olefinen, vorzugsweise in Gegenwart eines aluminiumorganischen Cokatalysators.

11. Ausführungsform nach Anspruch 10, dadurch gekennzeichnet, daß das Olefin Ethylen ist und daß der Cokatalysator Triisobutylaluminium oder Diethylaluminiumchlorid ist.

**Revendications pour les Etats Contractants: BE, CH, DE, FR, GB, IT, LI, LU, NL, SE**

1. Catalyseur convenant pour la polymérisation d'oléfines, obtenu

(1) en formant une solution d'un premier constituant de catalyseur en faisant réagir un halogénure métallique choisi parmi des dihalogénures métalliques et des hydroxyhalogénures métalliques des métaux des groupes IIA ou IIB avec un tétrahydrocarbylate de titane, puis

(2) en mettant en contact cette solution de ce premier constituant du catalyseur avec un dihydrocarbylmagnésium et un halogénure d'hydrocarbylaluminium pour obtenir au moins un précipité solide, puis

(3) en traitant ce précipité solide par une source d'échange d'ions halogénure choisie parmi des halogénures des métaux de transition.

2. Catalyseur selon la revendication 1, caractérisé en ce que ce tétrahydrocarbylate de titane répond à la formule:

$$Ti(OR)_4$$

dans laquelle chacun des R est choisi individuellement parmi un radical hydrocarboné alkyle, cycloalkyle, aryle, alkaryle ou aralkyle contenant 1 à 20 atomes de carbone.

3. Catalyseur des revendications 1 ou 2, caractérisé en ce que dihydrocarbylmagnésium est choisi parmi des dialkylesmagnésium dans lesquels chaque groupe alkyle a 1 à 6 atomes de carbone.

4. Procédé selon l'une quelconque des revendications 1 à 3, caractérisé en ce que cet halogénure d'hydrocarbylaluminium est choisi parmi ceux répondant aux formules:

$$RAlX_2$$

$$R_2AlX, \text{ et}$$

$$R_3Al_2X_3$$

dans lesquelles chacun des R est choisi individuellement parmi les radicaux alkyle contenant 1 à 20 atomes de carbone par radical et X est un atome d'halogène.

5. Catalyseur selon l'une quelconque des revendications 1 à 4, caractérisé en ce que cet halogénure de métal est le dichlorure de magnésium, en ce que ce tétrahydrocarbylate de titane est le tétraéthylate de titane et en ce que cet halogénure d'hydrocarbylaluminium est le sesquichlorure d'éthylaluminium.

6. Catalyseur selon l'une quelconque des revendications 1 à 5, caractérisé en ce que cet halogénure de métal de transition est un tétrachlorure de titane.

7. Catalyseur suivant l'une quelconque des revendications 1 à 6, caractérisé en ce que ce dihydrocarbylmagnésium est un n-butyle-sec-butyle magnésium.

8. Catalyseur suivant l'une quelconque des revendications 1 à 7, caractérisé en ce que cette solution de ce premier constituant de catalyseur est mise en contact avec ce dihydrocarbylmagnésium et cet halogénure d'hydrocarbylaluminium simultanément; ou en ce que cette solution de ce premier constituant du catalyseur est d'abord mise en contact avec cet halogénure d'hydrocarbylaluminium, puis le métal réactionnel obtenu est mis en contact avec ce dihydrocarbylmagnésium.

9. Catalyseur suivant l'une quelconque des revendications 1 à 8, caractérisé en ce que cet halogénure de métal de (1) est le dichlorure de magnésium et en ce que le rapport molaire du tétrahydrocarbylate de titane au dichlorure de magnésium est dans l'intervalle de 2:1 à 10:1, le rapport molaire de l'halogénure d'hydrocarbylaluminium dans (2) au tétrahydrocarbylate de titane dans (1) est dans l'intervalle de 1:3 à 1:6, et en ce que le rapport molaire du dihydrocarbylmagnésium dans (2) au tétrahydrocarbylate de titane dans (1) est dans l'intervalle de 10:1 à 1:10.

10. Utilisation du catalyseur suivant l'une quelconque des revendications 1 à 9, pour la polymérisation d'oléfines, de préférence en présence d'un cocatalyseur d'organo-aluminium.

11. Mode de réalisation de la revendication 10, caractérisé en ce que cette oléfine est l'éthylène et ce cocatalyseur est le chlorure de triisobutylaluminium ou de diéthylaluminium.

**Revendications pour l'Etat Contractant: AT**

1. Procédé de préparation d'un catalyseur convenant pour la polymérisation d'oléfines, consistant

(1) à former une solution d'un premier constituant du catalyseur en faisant réagir un halogénure métallique choisi parmi des dihalogénures métalliques et des hydroxyhalogénures métalliques de métaux des groupes IIA ou IIB avec un tétrahydrocarbylate de titane, puis

(2) à mettre en contact cette solution de ce premier constituant du catalyseur avec un dihydrocarbylmagnésium et un halogénure d'hydrocarbylaluminium pour obtenir au moins un précipité solide, puis

(3) à traiter ce précipité solide par une source d'échange d'ions halogénure choisie parmi les halogénures des métaux de transition.

2. Procédé de la revendication 1, caractérisé en ce que ce tétrahydrocarbylate de titane répond à la formule:

$$Ti(OR)_4$$

dans laquelle R est choisi individuellement parmi un radical hydrocarboné alkyle, cycloalkyle, aryle, alkaryle ou aralkyle contenant 1 à 20 atomes de carbone.

3. Procédé des revendications 1 ou 2, caractérisé en ce que ce dihydrocarbylmagnésium est choisi parmi des dialkyles magnésium dans lesquels chaque groupe alkyle a 1 à 6 atomes de carbone.

4. Procédé suivant l'une quelconque des revendications 1 à 3, caractérisé en ce que cet halogénure d'hydrocarbylaluminium est choisi parmi ceux répondant aux formules:

$RAlX_2$;

$R_2AlX$, et

$R_3Al_2X_3$

dans lesquelles chaque R est choisi individuellement parmi les radicaux alkyle contenant 1 à 20 atomes de carbone par radical et X est un atome d'halogène.

5. Procédé selon l'une quelconque des revendications 1 à 4, caractérisé en ce que cet halogénure métallique est du dichlorure de magnésium, en ce que ce tétrahydrocarbylate de titane est du tétraéthylate de titane et en ce que cet halogénure d'hydrocarbylaluminium est le sesquichlorure d'éthylaluminium.

6. Procédé selon l'une quelconque des revendications 1 à 5, caractérisé en ce que cet halogénure de métal de transition est du tétrachlorure de titane.

7. Procédé selon l'une quelconque des revendications 1 à 6, caractérisé en ce que cet hydrocarbylmagnésium est du n-butyle-sec-butyle magnésium.

8. Procédé selon l'une quelconque des revendications 1 à 7, caractérisé en ce que cette solution du premier constituant du catalyseur est mise en contact avec ce dihydrocarbylmagnésium et cet halogénure d'hydrocarbylaluminium, simultanément; ou dans lequel cette solution de ce premier constituant du catalyseur est d'abord mise en contact avec cet halogénure d'hydrocarbylaluminium, puis le mélange réactionnel obtenu est mis en contact avec ce dihydrocarbylmagnésium.

9. Procédé selon l'une quelconque des revendications 1 à 8, caractérisé en ce que cet halogénure métallique dans (1) est du dichlorure de magnésium et en ce que le rapport molaire du tétrahydrocarbylate de titane au dichlorure de magnésium est dans l'intervalle de 2:1 à 10:1, le rapport molaire de l'halogénure hydrocarbylaluminium dans (2) au tétrahydrocarbylate de titane dans (1) est dans l'intervalle 1:3 à 1:6, et le rapport molaire du dihydrocarbylmagnésium dans (2) au tétrahydrocarbylate de titane dans (1) est dans l'intervalle de 10:1 à 1:10.

10. Utilisation du catalyseur tel qu'obtenu dans l'une quelconque des revendications 1 à 9 pour la polymérisation d'oléfines, de préférence en présence d'un cocatalyseur d'organo-aluminium.

11. Mode de réalisation de la revendication 10, caractérisé en ce que cette oléfine est l'éthylène et ce cocatalyseur est le chlorure de triisobutylaluminium ou de diéthylaluminium.